# DEMANDE DE BREVET EUROPEEN

(11) **EP 2 280 367 A1**
(43) Date de publication de la demande: **02.02.2011**
(21) Numéro de dépôt: 10168238.3
(22) Date de dépôt: 02.07.2010
(51) Int. Cl.: G06K 9/00, G06K 9/22

(54) **Procédé d'identification du visage d'un individu et terminal de télécommunicatoin mettant en oeuvre un tel procédé**

(30) Priorité: 20.07.2009 FR 0955045
(71) Demandeur: Alcatel Lucent, 75007 Paris (FR)
(72) Inventeur: Daniellou, Ronan, 91620, NOZAY (FR); Maaradji, Abderrahmane, 91620, NOZAY (FR)
(74) Mandataire: Nicolle, Olivier

(57) **Abrégé**

La présente invention concerne un procédé d'identification du visage (16) d'un individu à l'aide d'un dispositif (10) comprenant une caméra (12) pouvant saisir des images (14) et transmettre des informations relatives à ces images (14) via un réseau de communication (17), **caractérisé en ce que**, le dispositif étant un terminal mobile de communication, le terminal mobile effectue les étapes suivantes:
- L'étape de stocker dans le terminal mobile (10) des paramètres relatifs à des visages d'individus,
- L'étape de générer des paramètres relatifs à un visage (16) présent sur une image (14) saisie par le terminal mobile (10), et
- L'étape de comparer les paramètres stockés avec les paramètres générés de façon à identifier un individu dont les paramètres stockés correspondent aux paramètres générés par le terminal mobile (10).

## Description

La présente invention concerne un procédé d'identification du visage d'un individu ainsi qu'un terminal de télécommunication mettant en oeuvre un tel procédé.

Il est connu d'utiliser des images saisies par des caméras pour identifier, de façon totalement ou partiellement automatique, des visages présents sur ces images saisies.

Selon un premier exemple de procédé d'identification totalement automatisé, une telle identification peut être mise en oeuvre dans des manifestations sportives pour filtrer l'accès à ces manifestations.

A cet effet, des caméras saisissent des images des visages de personnes souhaitant accéder à ces manifestations, ces images étant ensuite transmises à des serveurs distants - typiquement d'un service administratif ou judiciaire - qui comparent chaque visage présent sur une image saisie à des visages enregistrés dans une base de données référençant des individus susceptibles de perturber de telles manifestations sportives.

Si un visage présent dans une image saisie par la caméra correspond à un visage enregistré dans le serveur, le serveur distant informe un service de sécurité qui interdit l'accès à la manifestation sportive à l'individu dont le visage est enregistré.

Selon un second procédé partiellement automatisé, une telle identification est mise en oeuvre dans un lieu public à l'aide de caméras transmettant des images à des serveurs distants qui comparent chaque visage présent sur une image saisie à des visages enregistrés dans une base de données référençant des individus recherchés, par exemple des personnes disparues ou des délinquantes.

Si un visage présent dans une image saisie dans ce lieu public correspond à un visage enregistré dans la base de données du serveur distant, une autorité administrative ou judiciaire reçoit une communication transmettant, d'une part, le visage présent dans l'image saisie par la caméra et, d'autre part, le visage enregistré dans la base de données du serveur distant afin de permettre une confirmation visuelle - par un membre de cette autorité - de la correspondance établie par le serveur distant, une intervention pouvant être déclenchée en cas de confirmation.

La présente invention résulte de la constatation que de tels procédés connus d'identification du visage présentent de nombreux inconvénients. Notamment, ils requièrent l'utilisation de bases de données, stockées dans des serveurs distants, présentant des tailles importantes compte tenu notamment de la quantité d'informations requises pour stocker un visage et du nombre élevé de visages concernés par les applications précédemment décrites.

En outre la transmission des images saisies par les caméras aux serveurs centraux entraîne des débits importants d'informations - et donc des coûts et des délais élevés.

De plus le coût d'utilisation de ces procédés peut être accru par la nécessité de soumettre à une confirmation visuelle - typiquement par un agent administratif ou judiciaire - des correspondances établies de façon automatique.

Un autre inconvénient réside dans le fait que de tels procédés mettent en oeuvre des caméras maintenus en des endroits fixes qui peuvent être simplement évités par des personnes recherchés et souhaitant éviter d'être identifiés.

Finalement, il convient de noter que de tels procédés peuvent être perçus comme des atteintes à certains droits fondamentaux, tels que le respect de la vie privé, notamment dans la mesure où un tiers - l'autorité administrative ou judiciaire - dispose d'images des visages d'individus qui ignorent parfois l'existence et/ou le devenir de ces images.

La présente invention vise à résoudre au moins un de ces problème en proposant un procédé permettant de décentraliser le traitement des données relatives à des visages présents dans des images saisis par des caméras et, notamment, sans requérir la transmission de ces visages vers un serveur distant de façon à limiter le sentiment d'atteinte à la vie privée que sa mise en oeuvre peut générer vis-à-vis de ses utilisateurs.

C'est pourquoi l'invention concerne un procédé d'identification du visage d'un individu à l'aide d'un dispositif comprenant une caméra pouvant saisir des images et transmettre des informations relatives à ces images via un réseau de communication, **caractérisé en ce que**, le dispositif étant un terminal mobile de communication, le terminal mobile effectue les étapes suivantes:
- L'étape de stocker dans le terminal mobile des paramètres relatifs à des visages d'individus,
- L'étape de générer des paramètres relatifs à un visage présent sur une image saisie par le terminal mobile, et
- L'étape de comparer les paramètres stockés avec les paramètres générés de façon à identifier un individu dont les paramètres stockés correspondent aux paramètres générés par le terminal mobile.

Une telle invention présente l'avantage de réduire les coûts et d'accroître la rapidité d'identifications de visages au moyen de caméras. De fait les caméras mises en oeuvre sont celles de terminaux mobiles de communication présentes dans un réseau de communication, typiquement des téléphones portables.

Par conséquent le nombre de terminaux pouvant intervenir pour identifier des individus est accru très significativement puisque de nombreux terminaux mobiles peuvent aisément implémenter l'invention par l'installation des moyens logiciels requis.

A cet effet l'invention met en oeuvre des paramètres d'un visage qui peuvent être codés avec une quantité moindre de données que l'image de l'ensemble du visage de telle sorte que la quantité de mémoire requise pour stocker une base de données de tels paramètres est compatible avec les mémoires des téléphones portables.

En outre un utilisateur de terminal mobile peut contrôler l'éventuelle transmission d'une image saisie à un serveur distant de telle sorte que le sentiment d'atteinte à la vie privée est limité dans un procédé conforme à l'invention.

Dans une réalisation, le procédé comprend l'étape de requérir une autorisation d'un utilisateur du terminal mobile pour émettre les paramètres générés et/ou les paramètres stockés de l'individu identifié à un serveur distant muni d'une base de données stockant les visages d'individus.

Selon une réalisation, le procédé comprend l'étape de transmettre du serveur distant au terminal mobile des images de visages conformes aux paramètres générés et/ou aux paramètres stockés de l'individu identifié.

Dans une réalisation, le procédé comprend l'étape de requérir une confirmation de l'utilisateur du terminal mobile vis-à-vis de la correspondance entre un visage transmis par le serveur distant et le visage présent sur l'image saisie par la caméra.

Selon une réalisation, le procédé comprend l'étape pour l'utilisateur de confirmer la correspondance en sélectionnant un visage affiché sur son terminal mobile.

Dans une réalisation, le procédé comprend l'étape de requérir une autorisation de l'utilisateur du terminal mobile pour émettre le visage sélectionné au serveur distant.

Selon une réalisation, le procédé comprend l'étape pour le serveur distant de transmettre au terminal mobile un message confirmant ou infirmant une correspondance entre le visage présent dans l'image saisie par le terminal mobile et le visage de l'individu identifié.

Dans une réalisation, l'invention comprend l'étape pour le terminal de vérifier l'identité du serveur distant préalablement à toute transmission.

Selon une réalisation, le procédé comprend l'étape de transmettre une localisation de la position du terminal mobile lors de la saisie de l'image au serveur distant.

Dans une réalisation, les paramètres relatifs à un visage généré et/ou stocké sont des mesures de paramètres physiques du visage relatives à des dimensions, des formes, des distances et/ou des couleurs d'éléments du visage.

L'invention concerne également un terminal mobile de télécommunication comprenant une caméra pouvant saisir des images et transmettre des informations relatives à ces images via un réseau de communication, caractérisé en ce qu'il comprend des moyens pour identifier un individu selon un procédé conforme à l'une des réalisations précédentes, ces moyens comprenant:
- Des moyens pour stocker des paramètres relatifs à des visages d'individus,
- Des moyens pour générer des paramètres relatifs à un visage présent sur une image saisie par le terminal mobile, et
- Des moyens pour comparer les paramètres stockés avec les paramètres générés de façon à identifier un individu dont les paramètres stockés correspondent aux paramètres générés par le terminal mobile.

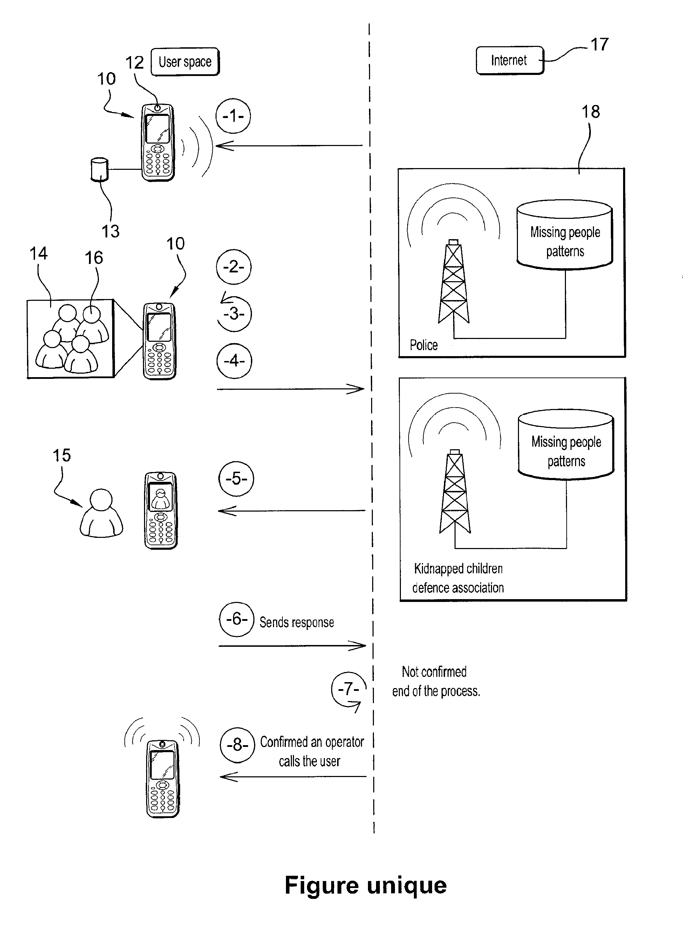

L'invention sera mieux comprise à la lumière de la description effectuée ci-dessous, à titre illustratif et non limitatif, en référence à l'unique figure ci-jointe sur laquelle sont représentées différentes étapes d'un procédé selon l'invention.

En référence à cette figure sont représentées différentes étapes 1 à 8 d'un procédé d'identification du visage d'un individu mettant en oeuvre un terminal mobile 10 conforme à l'invention.

Plus précisément, le terminal 10 est muni, d'une part, d'une caméra 12 destinée à saisir des images numériques et, d'autre part, d'une base 13 de paramètres relatifs à des visages d'individus.

Ces paramètres - par exemple la forme, les dimensions et/ou la couleur d'un ou de plusieurs éléments liés au visage tels que le crâne, la chevelure, les mâchoires, les yeux ou les pommettes - sont transmis au terminal portable 10, lors d'une première étape 1, via un réseau 17 de télécommunication tel que le réseau Internet, par un serveur distant 18 - par exemple un serveur de police répertoriant les visages de personnes portées disparues.

Lors d'une seconde étape 2, le terminal 10 génère des paramètres propres à un visage 16 présent sur une image 14 saisie par le terminal mobile 10.

Ainsi, lors d'une étape 3, le terminal mobile 10 peut comparer les paramètres stockés dans sa base 13 avec les paramètres générés à partir du visage 16 présent dans l'image 14 de façon à identifier l'individu dont les paramètres stockés concordent avec les paramètres générés.

Dans cette réalisation, ces paramètres générés et les paramètres stockés concordant sont ultérieurement transmis - étape 4 - au serveur distant 18 afin que ce dernier transmette en retour - étape 5 - au terminal mobile 10 une ou plusieurs images de visages correspondant à ces paramètres.

Ainsi, l'utilisateur 15 du terminal 10 peut consulter ces images - issues d'une caméra et/ou générées par un calcul - de façon à confirmer la concordance entre le visage 16 saisi et le visage transmis par le serveur distant 18.

Dans cette réalisation préférée, l'autorisation de cet utilisateur 15 du terminal 10 est requise préalablement à toute transmission d'images, de paramètres générés et/ou de paramètres sélectionnés au serveur distant.

L'utilisateur 15 du terminal 10 peut confirmer ou infirmer - étape 6 - une correspondance entre le visage 16 présent dans l'image saisie 14 et le visage transmis par le serveur distant.

Dans cette réalisation, en cas d'infirmation, un message est affiché par le terminal 10 pour informer son utilisateur 15 de l'arrêt du procédé. Le cas échéant, en cas de confirmation, une personne accédant au serveur distant 18 - typiquement un agent de la police administrative ou judiciaire - peut prendre contact avec l'utilisateur via son terminal mobile lors d'une étape 8.

La présente invention est susceptible de nombreuses variantes. Notamment, afin d'éviter d'éventuels détournements d'informations confidentielles, le terminal 10 peut être muni de moyens permettant de vérifier l'identité du serveur distant 18 préalablement à toute transmission.

Typiquement, une telle identification peut être effectuée au moyen de certificats selon une structure du type clef publique/clef privés.

Les utilisations de l'invention sont également nombreuses, par exemple dans la recherche de personnes portées disparues, de criminels, etc. Aussi, dans une variante, l'utilisateur du terminal précise une catégorie d'individus dont les caractéristiques sont recherchées.

Finalement, il convient de noter que le procédé peut comprendre une étape supplémentaire pour le terminal de transmettre une localisation, du terminal et/ou du lieu de saisie de l'image, au serveur d'identification. Une telle géolocalisation permet notamment de limiter les paramètres de visage transmis à ceux susceptibles de se trouver dans cette localisation et/ou de poursuivre un individu recherché.

## Revendications

1. Procédé d'identification du visage (16) d'un individu à l'aide d'un dispositif (10) comprenant une caméra (12) pouvant saisir des images (14) et transmettre des informations relatives à ces images (14) via un réseau de communication (17), **caractérisé en ce que**, le dispositif étant un terminal mobile de communication, le terminal mobile effectue les étapes suivantes:
- L'étape de stocker dans le terminal mobile (10) des paramètres relatifs à des visages d'individus,
- L'étape de générer des paramètres relatifs à un visage (16) présent sur une image (14) saisie par le terminal mobile (10), et
- L'étape de comparer les paramètres stockés avec les paramètres générés de façon à identifier un individu dont les paramètres stockés correspondent aux paramètres générés par le terminal mobile (10).

2. Procédé selon la revendication 1 **caractérisé en ce qu'**il comprend l'étape de requérir une autorisation d'un utilisateur (15) du terminal mobile (10) pour émettre les paramètres générés et/ou les paramètres stockés de l'individu identifié à un serveur distant (18) stockant les visages d'individus.

3. Procédé selon la revendication 2 **caractérisé en ce qu'**il comprend l'étape de transmettre du serveur distant (18) au terminal mobile (10) une image de visage conforme aux paramètres générés et/ou aux paramètres stockés de l'individu identifié.

4. Procédé selon la revendication 3 **caractérisé en ce qu'**il comprend l'étape de requérir de l'utilisateur (15) du terminal mobile (10) une confirmation de la correspondance entre le visage transmis par le serveur distant et le visage (16) présent sur l'image (14) saisie par la caméra (12).

5. Procédé selon la revendication 4 **caractérisé en ce qu'**il comprend l'étape pour l'utilisateur (15) de confirmer la correspondance en sélectionnant un visage affiché sur son terminal mobile (10).

6. Procédé selon la revendication 5 **caractérisé en ce qu'**il comprend l'étape de requérir une autorisation de l'utilisateur (15) du terminal mobile (10) pour émettre le visage sélectionné au serveur distant (18).

7. Procédé selon la revendication 5 ou 6 **caractérisé en ce qu'**il comprend l'étape pour le serveur distant (18) de transmettre au terminal mobile (10) un message confirmant ou infirmant une correspondance entre le visage sélectionné et le visage stocké de l'individu identifié.

8. Procédé selon l'une des revendications précédentes **caractérisé en ce qu'**il comprend l'étape pour le terminal (10) de vérifier l'identité du serveur distant (18) préalablement à toute transmission.

9. Procédé selon l'une des revendications précédentes **caractérisé en ce qu'**il comprend l'étape de transmettre au serveur distant (18) une localisation de la position du terminal mobile (10) lors de la saisie de l'image (14).

10. Procédé selon l'une des revendications précédentes **caractérisé en ce que** les paramètres générés et/ou stockés sont des mesures de paramètres physiques du visage relatives à des dimensions, des formes, des distances et/ou des couleurs d'éléments du visage

11. Terminal mobile (10) de télécommunication comprenant une caméra pouvant saisir des images (14) et transmettre des informations relatives à ces images (14) via un réseau (17) de communication, **caractérisé en ce qu'**il comprend des moyens pour identifier un individu selon un procédé conforme à l'une des revendications précédentes, ces moyens comprenant:
- Des moyens pour stocker des paramètres relatifs à des visages d'individus,
- Des moyens pour générer des paramètres relatifs à un visage (16) présent sur une image (14) saisie par le terminal mobile (10), et
- Des moyens pour comparer les paramètres stockés avec les paramètres générés de façon à identifier un individu dont les paramètres stockés correspondent aux paramètres générés par le terminal mobile (10).
